(19) Europäisches Patentamt / European Patent Office / Office européen des brevets

(11) **EP 4 250 191 A1**

(12) **EUROPEAN PATENT APPLICATION**
published in accordance with Art. 153(4) EPC

(43) Date of publication:
**27.09.2023   Bulletin 2023/39**

(21) Application number: **21894283.7**

(22) Date of filing: **25.08.2021**

(51) International Patent Classification (IPC):
**G06N 20/20** (2019.01)

(52) Cooperative Patent Classification (CPC):
**G06N 20/00; G06N 20/20**

(86) International application number:
**PCT/JP2021/031189**

(87) International publication number:
**WO 2022/107408 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **20.11.2020   JP 2020193712**

(71) Applicant: **Aising Ltd.**
**Tokyo 107-0052 (JP)**

(72) Inventors:
• **IDESAWA Junichi**
  **Tokyo 107-0052 (JP)**
• **SUGAWARA Shimon**
  **Tokyo 107-0052 (JP)**

(74) Representative: **Kilian Kilian & Partner**
**Aidenbachstraße 54**
**81379 München (DE)**

(54) **INFORMATION PROCESSING DEVICE, METHOD, PROGRAM, AND SYSTEM**

(57)    Provided is an information processing apparatus including: a data acquiring section that acquires input data and correct answer data that corresponds to the input data; an inferred output data generating section that generates inferred output data of an ensemble learning-type inference model by inputting the input data to the ensemble learning-type inference model that performs inference based on each inference result by a plurality of inference models; and an additional learning processing section that performs additional learning processing with respect to a part of or all of each of the inference models that constitute the ensemble learning-type inference model by using an update amount based on the inferred output data and the correct answer data.

FIG. 7

$$ngrad = \eta \, ( y - y\_hat)$$

**Description**

Technical Field

The present invention relates to an information processing apparatus and the like which perform machine learning and, in particular, ensemble learning.

Background Art

As a method of machine learning, ensemble learning which realizes a learner with higher accuracy using a plurality of learners and, in particular, a plurality of weak learners, is known. Ensemble learning can be roughly divided into boosting learning and bagging learning.

While boosting learning has many variations, a representative method is gradient boosting (for example, Patent Literature 1).

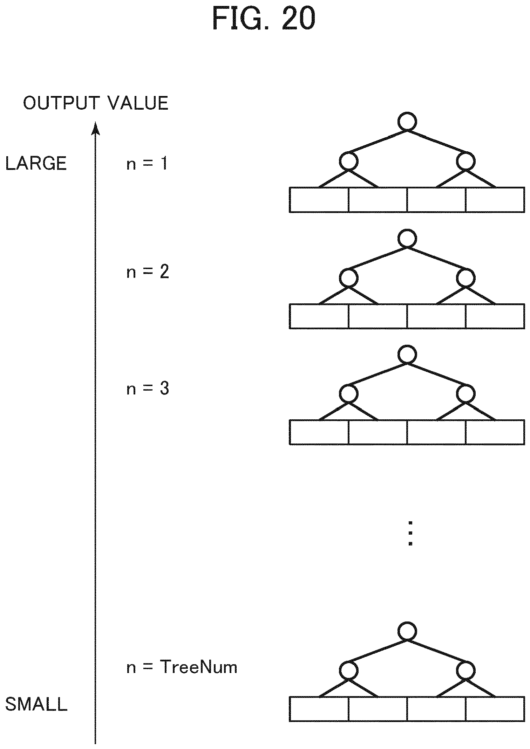

Figure 20 is a conceptual diagram of a learner configuration in gradient boosting. In the example shown in Figure 20, a decision tree is adopted as the learner and TreeNum-number of decision trees are arranged in series. Machine learning processing and inference processing are performed on the premise of such a configuration. Note that, in the present specification, a trained learner having performed machine learning may be referred to as an inference model.

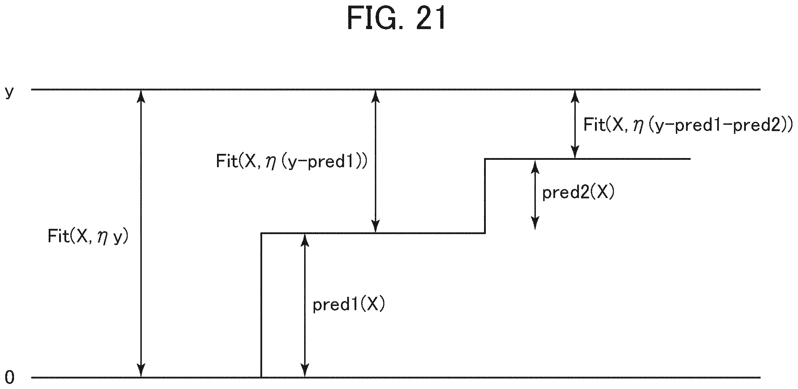

Figure 21 is a conceptual diagram of learning processing performed with respect to each learner according to gradient boosting. In Figure 21, input data is denoted by X and correct answer data to be a learning target is denoted by y.

As is apparent from Figure 21, with respect to a n = 1st learner, based on the input X and a gradient value $\eta y$ obtained by multiplying y by a learning rate $\eta$, supervised learning (fitting) is performed (this operation is indicated as a function Fit (X, y)). In addition, with respect to a n = 2nd learner, based on the input X and a gradient value calculated by multiplying, by the learning rate $\eta$, a difference between an inferred output (pred1) of the 1st learner after learning and y, supervised learning is performed (Fit (X, y - pred1)). Furthermore, with respect to a n = 3rd learner, based on the input X and a gradient value calculated by multiplying, by the learning rate $\eta$, a value obtained by subtracting the inferred output (pred1) of the 1st learner after learning and an inferred output (pred2) of the 2nd learner after learning from y, supervised learning is performed (Fit (X, y - pred1 - pred2)). Such learning is sequentially performed until n = TreeNum is reached. In other words, learning is sequentially performed in each learner so as to reduce an inference error of higher-order learners.

On the other hand, as corresponding inference processing, first, predetermined input data to form a basis of inference is provided to each learner. Subsequently, an inferred output from each learner which corresponds to the input data such as an output value associated with an output node of a decision tree corresponding to the input data is calculated or read. Finally, by adding the inferred outputs of the respective learners or the like, a final inferred output of boosting is generated.

While bagging learning also has various aspects, a representative method is a random forest, for example.

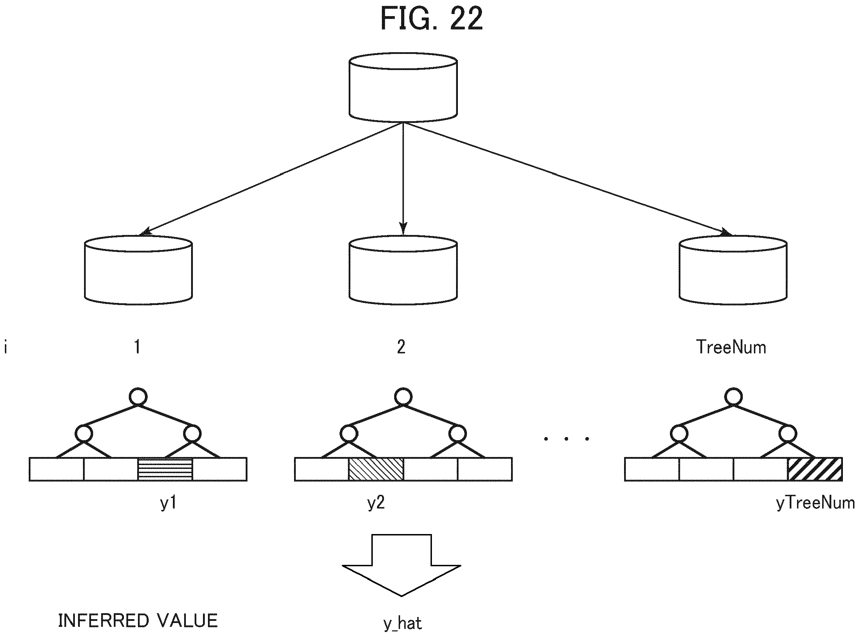

Figure 22 is a conceptual diagram of a learner configuration in a random forest. As is apparent from Figure 22, in the random forest, first, a plurality of pieces of data are selected by bootstrapping learning or the like from a same learning target data group and a plurality of data groups are generated. Subsequently, based on each data group, learning is performed by generating a decision tree for each data group.

In addition, as corresponding inference processing, based on an inferred output of each decision tree with respect to predetermined input data, a final inferred output as the random forest is generated. For example, when the decision tree is a regression tree, an inferred output y_hat is generated by calculating an arithmetic average of an output $y_i$ corresponding to an output node of each decision tree corresponding to the input data to form a basis of inference.

Citation List

Patent Literature

Patent Literature 1: Japanese Patent Laid-Open No. 2019-212171

Summary of Invention

Technical Problem

In recent years, for the purpose of adapting to a change in a learning target model after operation, which is called a concept drift, additional learning is performed on a trained model based on data obtained after operation.

However, to begin with, performing additional learning in an ensemble-type learner such as that described above is not common practice, so much so that a method thereof is yet to be sufficiently established. In particular, since an ensemble-type learner is constituted by a plurality of learners and, therefore, learning of each learner is necessary, suitable methodology regarding how to distribute an update amount to the respective learners in such a learning configuration has not been proposed. If the distribution is skewed, the ensemble-type learner as a whole cannot be appropriately updated and, as a result, there is a risk that various inconveniences may occur.

For example, as described above, each learner that constitutes a boosting learner is configured to learn an error between an accumulated value of inferred outputs of higher-order learners and a correct answer. However, when simply performing additional learning on the basis of the configuration described above, since a learning target of each learner is dependent on inferred outputs of higher-order inference models, update amounts and signs thereof vary among the respective learners. As a result, update amounts become skewed from the perspective of the boosting-type learner as a whole and, as a result, inconveniences such as unfavorable convergence stability can occur.

The present invention has been made against the technical background described above and an object thereof is to provide an additional learning method and an information processing apparatus or the like for executing the additional learning method which enable, in an ensemble-type learner constituted by a plurality of learners, optimization of update amounts to be distributed to the respective learners.

Further objects and advantageous effects of the present invention will be readily appreciated by those skilled in the art by reference to the following description of the specification.

Solution to Problem

The technical problem described above can be solved by an information processing apparatus and the like configured as follows.

The information processing apparatus according to the present invention includes: a data acquiring section that acquires input data and correct answer data that corresponds to the input data; an inferred output data generating section that generates inferred output data of an ensemble learning-type inference model by inputting the input data to the ensemble learning-type inference model that performs inference based on each inference result by a plurality of inference models; and an additional learning processing section that performs additional learning processing with respect to a part of or all of each of the inference models that constitute the ensemble learning-type inference model by using an update amount based on the inferred output data and the correct answer data.

According to such a configuration, since additional learning is performed with respect to each inference model using an update amount based on inferred output data that is a final output of the ensemble learning-type inference model and correct answer data, the update amount to be distributed to each learner can be optimized in the ensemble learning-type inference model which is constituted by a plurality of learners.

The ensemble learning-type inference model may be a boosting learning-type inference model which is constituted by a plurality of inference models formed by sequential learning so that each of the inference models reduces an inference error due to a higher-order inference model group.

According to such a configuration, since additional learning is performed with respect to each inference model using an update amount based on inferred output data that is a final output of the boosting learning-type inference model and correct answer data, learning can be parallelized and time related to additional learning can be reduced. In addition, since a same update amount is applied with respect to each inference model that constitutes the boosting inference model and a sign of the update amount is the same, forging-like learning can be performed and convergence stability can be improved.

The ensemble learning-type inference model may be a bagging learning-type inference model which performs inference based on each inference result of a plurality of inference models, each formed by learning based on a plurality of data groups extracted from a same learning target data group.

According to such a configuration, since additional learning is performed with respect to each inference model using an update amount based on inferred output data that is a final output of the bagging learning-type inference model and correct answer data, an update that realizes overall optimization can be performed.

The update amount may be a value based on a difference between the inferred output data and the correct answer data.

According to such a configuration, additional learning can be performed with respect to each inference model using an update amount based on a difference between inferred output data that is a final output of the ensemble learning-type inference model and correct answer data.

The update amount may be a value based on a value obtained by multiplying a difference between the inferred output data and the correct answer data by a learning rate.

According to such a configuration, additional learning can be performed with respect to each inference model using an update amount based on a difference between inferred output data that is a final output of the ensemble learning-type inference model and correct answer data. In addition, a degree of the update can be adjusted according to the learning rate.

The update amount may be a value calculated by dividing a value obtained by multiplying a difference between the inferred output data and the correct answer data by a learning rate by the number of inference models that constitute the ensemble learning-type inference model.

According to such a configuration, additional learning can be performed with respect to each inference model using an update amount based on a difference between inferred output data that is a final output of the ensemble learning-type inference model and correct answer data. In addition, a degree of the update can be adjusted according to the learning rate. Furthermore, an update amount can be distributed to each inference model in accordance with a size of a boosting inference model.

The inference model may be a trained decision tree.

According to such a configuration, inference and additional learning processing can be performed using the decision tree.

The additional learning processing may be processing of accumulating the update amount with respect to an inferred output of a decision tree which constitutes each of the inference models.

According to such a configuration, additional learning processing with a small calculation cost can be performed in a decision tree and additional learning can be performed at high speed.

The inference model may be a trained neural network.

According to such a configuration, inference and additional learning processing can be performed using the neural network.

The additional learning processing may be processing of updating, with respect to a neural network which constitutes each of the inference models, a parameter of the neural network by back-propagating the update amount.

According to such a configuration, additional learning can be performed by back-propagating an error with respect to the neural network. The backpropagation need not necessarily be performed sequentially and may be performed in mini batches.

The boosting learning-type inference model may further include a first inference model including: a first output data generating section that generates first output data by inputting the input data to a first approximate function generated based on training input data and training correct answer data that corresponds to the training input data; a second output data generating section that generates second output data by inputting the input data to a second trained model generated by performing machine learning based on the training input data and difference data between output data generated by inputting the training input data to the first approximate function and the training correct answer data; and a final output data generating section that generates final output data based on the first output data and the second output data, wherein the additional learning processing may be processing of updating the second trained model using an update amount based on difference data between the correct answer data and the first output data and the inferred output data.

According to such a configuration, since only the second trained model having learned a difference between an output of the first approximate function and the correct answer data is updated, a characteristic change of the model can be adapted while securing certain output accuracy.

In the boosting learning-type inference model, only inference models equal to or lower than a predetermined inference model may be configured as the first inference model.

According to such a configuration, since only lower-order inference models of which a contribution toward output is relatively small are updated by learning, fine adjustment can be performed.

The first approximate function may also be a first trained model generated by performing machine learning based on the training input data and the training correct answer data.

According to such a configuration, the first approximate function can be generated by machine learning.

The first approximate function may also be a function obtained by formulating a relationship between the training input data and the training correct answer data.

According to such a configuration, the first approximate function can be generated by formulating training data.

A conversion processing section may also be further included which converts, when the correct answer data is a label, the label into a numerical value.

According to such a configuration, a classification problem can be handled as a regression problem.

The additional learning processing may also be online learning.

According to such a configuration, since data input by online learning is sequentially learned every time data is input, a characteristic change of a learning target can be accommodated in a flexible manner.

The present invention can also be conceived as a method. Specifically, a method according to the present invention includes: a data acquisition step of acquiring input data and correct answer data that corresponds to the input data; an inferred output data generation step of generating inferred output data of an ensemble learning-type inference model by inputting the input data to the ensemble learning-type inference model that performs inference based on each inference result by a plurality of inference models; and an additional learning processing step of performing additional learning processing with respect to a part of or all of each of the inference models that constitute the ensemble learning-type inference model by using an update amount based on the inferred output data and the correct answer data.

The present invention can also be conceived as a program. Specifically, a program according to the present invention includes: a data acquisition step of acquiring input data and correct answer data that corresponds to the input data; an inferred output data generation step of generating inferred output data of an ensemble learning-type inference model by inputting the input data to the ensemble learning-type inference model that performs inference based on each inference result by a plurality of inference models; and an additional learning processing step of performing additional learning processing with respect to a part of or all of each of the inference models that constitute the ensemble learning-type inference model by using an update amount based on the inferred output data and the correct answer data.

The present invention can also be conceived as a system. Specifically, a system according to the present invention includes: a data acquiring section that acquires input data and correct answer data that corresponds to the input data; an inferred output data generating section that generates inferred output data of an ensemble learning-type inference model by inputting the input data to the ensemble learning-type inference model that performs inference based on each inference result by a plurality of inference models; and an additional learning processing section that performs additional learning processing with respect to a part of or all of each of the inference models that constitute the ensemble learning-type inference model by using an update amount based on the inferred output data and the correct answer data.

The present invention can also be conceived as a control apparatus. Specifically, a control apparatus according to the present invention is a control apparatus for controlling a target apparatus, the control apparatus including: a data acquiring section that acquires input data and correct answer data that corresponds to the input data from the target apparatus; an inferred output data generating section that generates inferred output data of an ensemble learning-type inference model by inputting the input data to the ensemble learning-type inference model that performs inference based on each inference result by a plurality of inference models; and an additional learning processing section that performs additional learning processing with respect to a part of or all of each of the inference models that constitute the ensemble learning-type inference model by using an update amount based on the inferred output data and the correct answer data.

Advantageous Effects of Invention

According to the present invention, an additional learning method and an information processing apparatus or the like for executing the additional learning method can be provided, which enable, in an ensemble-type learner constituted by a plurality of learners, optimization of update amounts to be distributed to the respective learners.

Brief Description of Drawings

[Figure 1] Figure 1 is a functional block diagram of an information processing apparatus that performs initial learning.
[Figure 2] Figure 2 is a functional block diagram of a control apparatus.
[Figure 3] Figure 3 is a general flow chart according to a first embodiment.
[Figure 4] Figure 4 is a detailed flow chart of processing executed by a control apparatus.
[Figure 5] Figure 5 is a detailed flow chart of control processing based on inference processing.
[Figure 6] Figure 6 is a detailed flow chart of additional learning processing.
[Figure 7] Figure 7 is a conceptual diagram of update processing according to the first embodiment.
[Figure 8] Figure 8 is a conceptual diagram of an update amount in additional learning according to the first embodiment.
[Figure 9] Figure 9 is an explanatory diagram related to a forging-like update.
[Figure 10] Figure 10 is an explanatory diagram related to an effect of additional learning.
[Figure 11] Figure 11 shows a comparative experiment example related to inference accuracy of a boosting inference model.
[Figure 12] Figure 12 is a general flow chart according to a second embodiment.
[Figure 13] Figure 13 is a conceptual diagram of each learning model that constitutes a boosting inference model during initial learning.
[Figure 14] Figure 14 is a detailed flow chart of operation processing.
[Figure 15] Figure 15 is a conceptual diagram of inference processing in each inference model that constitutes a boosting inference model.
[Figure 16] Figure 16 is a conceptual diagram of online additional learning performed in each inference model that constitutes a boosting inference model.
[Figure 17] Figure 17 is a conceptual diagram of update processing according to a third embodiment.
[Figure 18] Figure 18 is an explanatory diagram showing an overview of a method of solving a classification problem using a regression tree.

[Figure 19] Figure 19 is an explanatory diagram of a case where additional learning is performed in a method of solving a classification problem using a regression tree.

[Figure 20] Figure 20 is a conceptual diagram of a learner configuration in gradient boosting.

[Figure 21] Figure 21 is a conceptual diagram of learning processing performed with respect to each learner according to gradient boosting.

[Figure 22] Figure 22 is a conceptual diagram of a learner configuration in a random forest.

Description of Embodiments

Hereinafter, embodiments of the present invention will be described in detail with reference to the accompanying drawings.

(1. First embodiment)

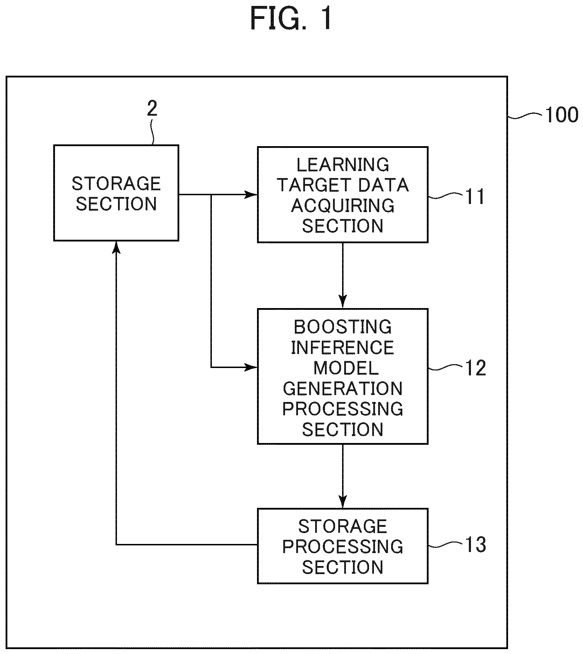

A first embodiment of the present invention will be described with reference to Figures 1 to 11. In the present embodiment, an example will be described in which, after generating a trained model by performing initial learning on a predetermined information processing apparatus 100, the trained model is mounted to a control apparatus 200 which controls a predetermined control target apparatus and, subsequently, the control apparatus 200 performs additional learning based on data obtained from the control target apparatus by controlling the control target apparatus.

Note that, the control target apparatus is not particularly limited in the present embodiment. Therefore, for example, the control target apparatus may also be a work machine in a factory or a vehicle such as a passenger automobile. In addition, the control target apparatus need not include a mechanical element and, for example, the control target apparatus may also be an operation of information on an information processing apparatus.

(1.1 Configuration)

Figure 1 is a functional block diagram of the information processing apparatus 100 that performs initial learning. As is apparent from Figure 1, the information processing apparatus 100 includes a storage section 2, a learning target data acquiring section 11, a boosting inference model generation processing section 12, and a storage processing section 13.

While the information processing apparatus 100 is a PC (personal computer) in the present embodiment, other apparatuses may be used as the information processing apparatus 100 as long as the apparatuses have an information processing function. In the present embodiment, a trained model or an inference model obtained by boosting learning may be referred to as a boosting inference model, a boosting learning-type inference model, or the like. Note that, the term "inference" means an output of a trained model and may also be replaced with terms such as "prediction" or "estimation".

Figure 1 is a functional block diagram of the information processing apparatus 100 and, as hardware, the information processing apparatus 100 includes a control section such as a CPU or a GPU, a storage section constituted by a ROM, a RAM, a hard disk and/or a flash memory, and the like, a communicating section constituted by a communicating unit or the like, an input section, a display control section, and an I/O section. The functions described above are mainly realized in the control section.

The storage section 2 stores data to be a learning target of machine learning. Learning target data is so-called training data or supervised data which is, for example, data acquired from the control target apparatus in advance, data obtained by simulation, or the like.

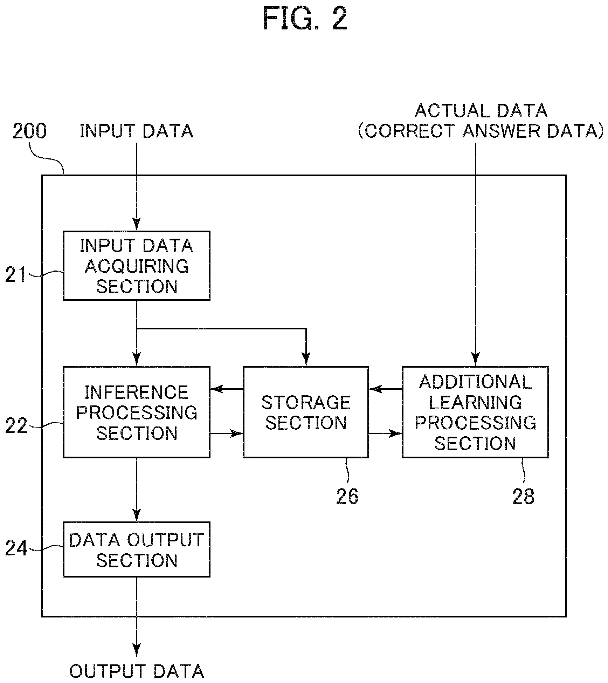

Figure 2 is a functional block diagram of the control apparatus 200 which is an embedded system to be built into the control target apparatus. The control apparatus 200 performs inference processing and additional learning processing. As is apparent from Figure 2, the control apparatus 200 includes an input data acquiring section 21, an inference processing section 22, a data output section 24, a storage section 26, and an additional learning processing section 28.

Figure 2 is a functional block diagram of the control apparatus 200 and, as hardware, the control apparatus 200 includes a control section such as a CPU, a storage section constituted by a ROM, a RAM and/or a memory such as a flash memory, and an I/O section. The respective functions described above are mainly realized in the control section.

Note that, hardware configurations are not limited to the configurations described above. Therefore, for example, a configuration of a system or the like constituted by a plurality of apparatuses may also be adopted.

(1.2 Operation)

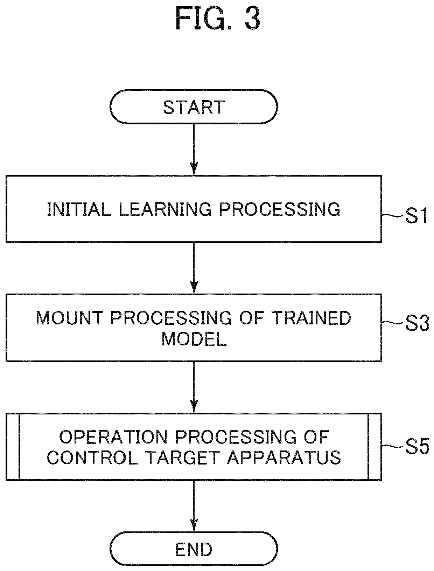

Next, an operation of the invention according to the present embodiment will be described with reference to Figures 3 to 11.

Figure 3 is a general flow chart according to the first embodiment and, more specifically, a flow chart related to a procedure from performing initial learning until operating the control apparatus 200 and performing additional learning.

As is apparent from Figure 3, first, initial learning processing is performed (S1). In initial learning processing, boosting learning is performed on the information processing apparatus 100 using training data or the like acquired from the control target apparatus in advance and a trained model or, more particularly, a boosting inference model optimal for controlling the control target apparatus is generated. Note that, a learner used in the present embodiment is a decision tree and, in particular, a regression tree capable of outputting consecutive numerical values.

More specifically, as shown in Figures 20 and 21, learning is sequentially performed in each learner so as to reduce an inference error of higher-order learners. In other words, the learning target data acquiring section 11 reads a combination of predetermined input data and correct answer data. Subsequently, based on the combination of input data and correct answer data, the boosting inference model generation processing section 12 generates a series of trained models which function as inference models.

More specifically, the boosting inference model generation processing section 12 first performs supervised learning in a highest decision tree based on the combination of the input data and the correct answer data. Subsequently, with respect to a lower decision tree, the boosting inference model generation processing section 12 performs supervised learning based on the input data and differential data between an output corresponding to the input data of the highest decision tree after learning and the correct answer data. A boosting inference model is generated by sequentially repeating such processing until a lowest learner.

As a method of supervised learning of a decision tree, various known methods can be adopted. For example, as is well known to those skilled in the art, learning may also be performed by determining a data division criterion which maximizes information gain from learning data and repetitively dividing data according to the criterion. In addition, in an inference stage, inferred output data may also be obtained by specifying an output node by classifying input data based on a division criterion obtained by learning and calculating an arithmetic average or the like of data associated with the output node. In this case, the inferred output data may also be associated with the output node in advance or calculated anew every time.

In addition, a method of initial learning is not limited to the method according to the present embodiment. For example, the highest learner may not perform learning and may simply output an average value of an inferred value of the highest learner and the correct answer data as well.

Subsequently, the storage processing section 13 stores the generated boosting inference model in the storage section 2 and the initial learning processing ends.

Returning to Figure 3, once the initial learning processing (S1) is completed, processing of mounting, to the control apparatus 200, the boosting inference model which is a trained model generated by performing initial learning is performed (S3).

In the present embodiment, mount processing of the boosting inference model to the control apparatus 200 is performed by connecting the information processing apparatus 100 and the control apparatus 200 to each other in a wired or wireless manner and transmitting the boosting inference model. In this case, the transmission may also be performed via a LAN, the Internet, or the like. The mount processing of the boosting inference model may also take any form as long as the mount processing is configured to enable inference processing by the boosting inference model on the control apparatus 200 and is not limited to the configuration according to the present embodiment. For example, the processing may involve transmitting the boosting inference model from the information processing apparatus 100 via a network such as the Internet and having the control apparatus 200 store the boosting inference model or a circuit which functions as the boosting inference model may also be mounted to the control apparatus 200. While the present embodiment adopts a configuration in which initial learning is performed on the information processing apparatus 100, alternatively, a configuration may also be adopted in which initial learning is also performed on the control apparatus 200.

After the end of the mount processing of the boosting inference model to the control apparatus 200, processing of further mounting or connecting the control apparatus 200 to the control target apparatus and operating the control target apparatus is performed (S5).

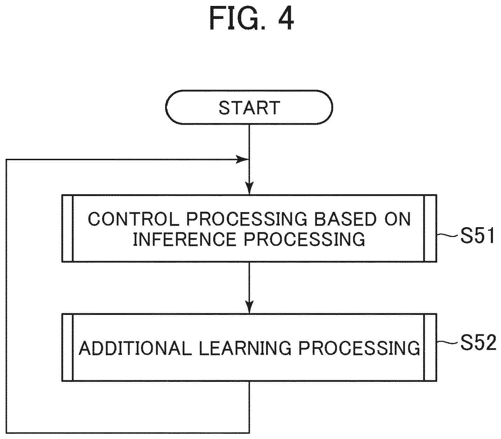

Figure 4 is a detailed flow chart of processing executed by the control apparatus 200 during the operation of the control target apparatus. As is apparent from Figure 4, when processing starts, control processing of the control target apparatus based on inference processing is performed (S51).

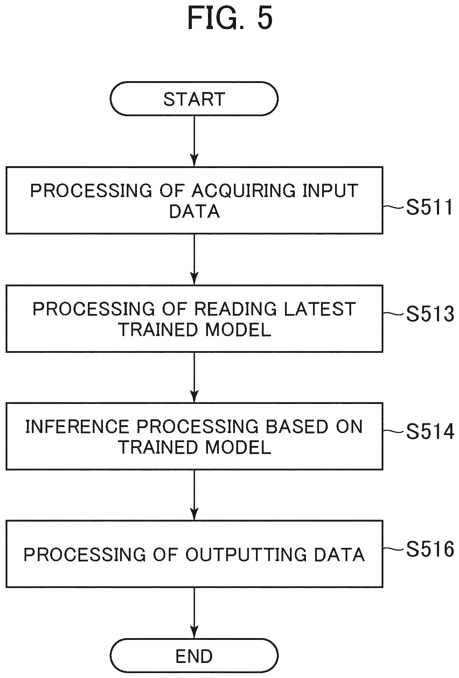

Figure 5 is a detailed flow chart of the control processing (S51) based on inference processing. As is apparent from Figure 5, when processing starts, the input data acquiring section 21 performs processing of acquiring input data from the control target apparatus (S511).

Input data refers to various kinds of data which is obtained from the control target apparatus and which forms a basis of inference. For example, when the control target apparatus is a vehicle and a braking distance is to be inferred using a vehicle velocity immediately prior to braking as an input, the input data is the vehicle velocity immediately prior to braking.

Next, the inference processing section 22 performs processing of reading a latest boosting inference model from the storage section 26 (S513).

Subsequently, the inference processing section 22 performs inference processing by inputting the input data to the read boosting inference model and generates output data (S514). In other words, by inputting input data to each inference model which is a trained decision tree that constitutes the boosting inference model, classification is performed in accordance with a branch condition associated with each node and an output node is specified. Subsequently, by adding output data associated with the output node specified in each inference model, final output data of the boosting inference model is generated. In terms of the example described above, the output data corresponds to the braking distance.

Subsequently, the generated output data is output from the control apparatus 200 by the data output section 24 (S516). The output data is provided to the control target apparatus (not illustrated) to be used in apparatus control. Subsequently, the processing ends.

Returning to Figure 4, once control processing based on inference processing is completed, additional learning processing is next performed (S52).

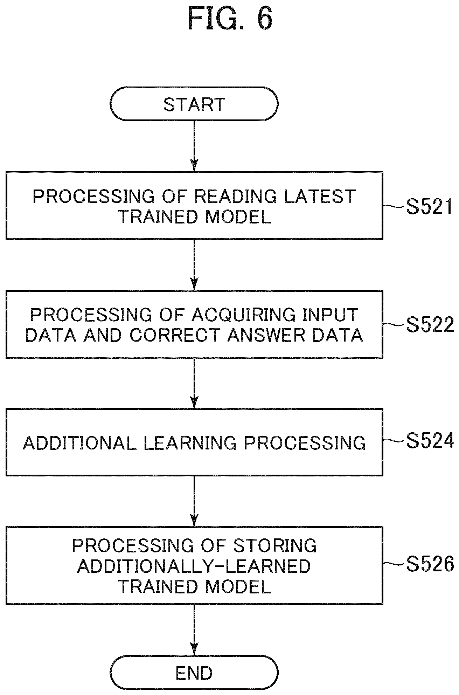

Figure 6 is a detailed flow chart of additional learning processing (S52). As is apparent from Figure 6, when processing starts, the additional learning processing section 28 performs processing of reading a latest trained model or, in other words, a boosting inference model from the storage section 26 (S521).

In addition, the additional learning processing section 28 performs processing of acquiring input data from the storage section 26 and acquiring correct answer data which is actual data corresponding to the input data from the control target apparatus (S522). For example, when the control target apparatus is a vehicle and a braking distance is to be inferred using a vehicle velocity immediately prior to braking as an input, the correct answer data is an actual braking distance acquired from the vehicle.

Subsequently, the additional learning processing section 28 performs additional learning processing with respect to the boosting inference model using the input data and the correct answer data (S524).

More specifically, first, the additional learning processing section 28 calculates a gradient (ngrad) according to the following equation by multiplying a difference between final inferred output data y_hat of the boosting inference model obtained in the inference processing (S514) and correct answer data y by a learning rate $\eta$.

$$[\text{Expression 1}]$$

$$\text{ngrad} \ = \ \eta \left( \text{y} \ - \ \hat{\text{y}} \right)$$

Note that, the difference between the final inferred output data y_hat and the correct answer data y is derived from the fact that a square error has been adopted as a loss function and a calculation method of a gradient is not limited to the method described above. Therefore, a gradient may also be calculated based on another loss function such as an absolute value error.

Next, an output value yn of each inference model that constitutes the boosting inference model is updated so as to distribute the gradient to each inference model. More specifically, according to the following equation, the output value yn corresponding to an output node (terminal node) of each inference model is updated by adding a value obtained by dividing the gradient (ngrad) by the number (TreeNum) of decision trees that constitute the boosting inference model.

$$[\text{Expression 2}]$$

$$\text{yn} \ = \ \text{yn} \ + \ \frac{\text{ngrad}}{\text{TreeNum}}$$

In the equation provided above, an equal sign represents an assignment of a value of a right side to a value of a left side. In addition, a method of updating an output value corresponding to an output node is not limited to the method described above and various modifications are possible. For example, an arithmetic average or a weighted average may also be taken using an update amount and an output value prior to the update.

By updating a decision tree using a method of simply adding to output data instead of changing a structure of the decision tree as described above, changes related to the structure of the decision tree such as a depth do not occur and calculations requiring a relatively large calculation amount such as a calculation of a branch condition need not be performed during additional learning. Therefore, an additional learning method of a decision tree can be provided in which additional learning only requires a small calculation cost, performing the additional learning does not alter inference time, and an additional storage capacity and the like are not required. Accordingly, for example, even when performing online additional learning or the like with respect to a decision tree under limited hardware resources, a control apparatus capable of securing reliability and safety of control can be provided.

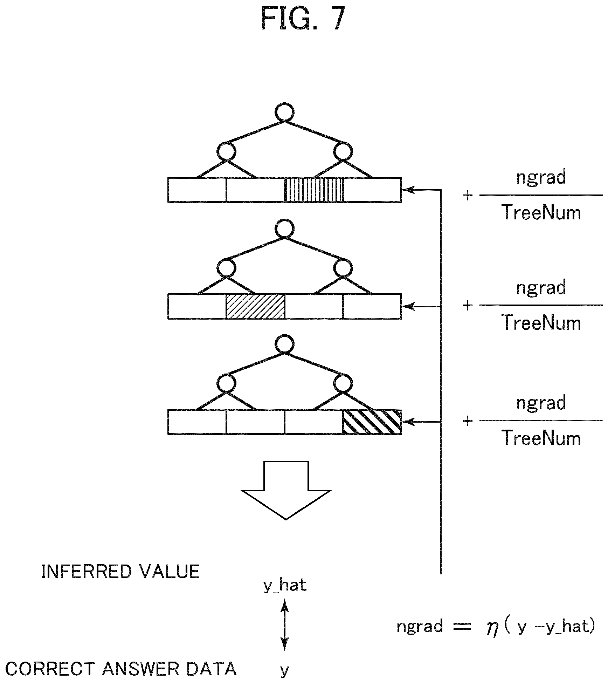

Figure 7 is a conceptual diagram of update processing according to the present embodiment. As is apparent from Figure 7, in the present embodiment, output data associated with an output node of each inference model that constitutes a boosting inference model is updated based on a value obtained by dividing, by the number of decision trees, a value obtained by multiplying a difference between inferred output data y_hat that is a final inference result of the boosting inference model and correct answer data y by a learning rate $\eta$.

According to such a configuration, since there is no need to perform sequential learning from high-order learners, learning can be parallelized and time related to additional learning can be reduced. Accordingly, so-called online learning and the like in which additional learning is performed accordingly using data obtained by operating the control target apparatus can be more readily performed.

In addition, a degree of the update can be adjusted according to the learning rate $\eta$. Furthermore, since an adjustment is performed based on the number of decision trees, an appropriate update amount can be distributed to each inference model in accordance with a size of the boosting inference model.

Moreover, since a same update amount is applied with respect to each inference model that constitutes the boosting inference model and a sign of the update amount is the same, forging-like learning can be performed and convergence stability of learning can be improved.

In addition, since the output node of each inference model is to be updated by an equal update amount, appropriate updates can even be performed in boosting learning which has a tendency that the lower the inference model, the smaller the update amount.

In other words, an additional learning method and an information processing apparatus or the like for executing the additional learning method can be provided, which enable, in an ensemble-type learner constituted by a plurality of learners, optimization of update amounts to be distributed to the respective learners.

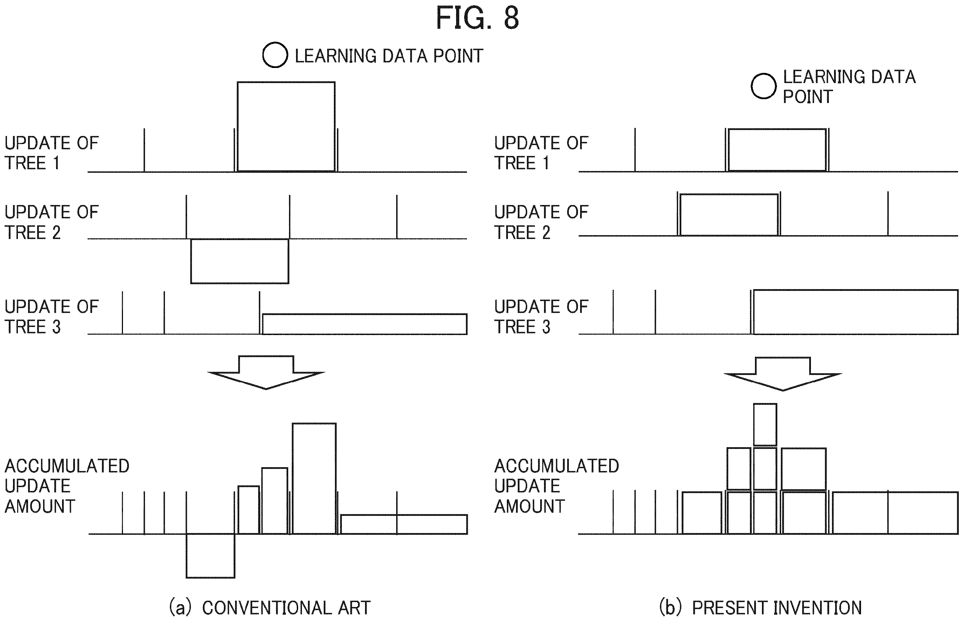

Figure 8 is a conceptual diagram of an update amount in additional learning according to the present embodiment. Figure 8(a) is a conceptual diagram of an update amount in a conventional boosting inference model, and Figure 8(b) is a conceptual diagram of an update amount in the boosting inference model according to the present embodiment. In addition, in both Figure 8(a) and Figure 8(b), as an example, an update amount in each divided space of three decision trees is indicated by a rectangle in an upper part of the diagrams and, on opposite side of arrows, an update amount in the boosting inference model as a whole obtained by accumulating the update amounts of the respective decision trees is indicated by a rectangle in a lower part of the diagrams.

In a state shown in Figure 8(a), it is assumed that learning data corresponding to an illustrated position has been newly input. In this case, based on the learning data, a positive update amount is generated in a third-from-left section in a decision tree 1, a negative update amount is generated in a second-from-left section in a decision tree 2, and a positive update amount is generated in a fourth-from-left section in a decision tree 3. An update amount in the boosting inference model as a whole is obtained by accumulating all of the update amounts.

As is apparent from the example shown in Figure 8, the accumulated update amount fluctuates with large and small differences every time sections are straddled.

By comparison, in a state shown in Figure 8(b), it is assumed that learning data corresponding to an illustrated position has been newly input. In this case, based on the learning data, a positive update amount is generated in the third-from-left section in the decision tree 1, a positive update amount is generated in the second-from-left section in the decision tree 2, and a positive update amount is generated in the fourth-from-left section in the decision tree 3. In this case, all of the update amounts and signs thereof are the same. An update amount in the boosting inference model as a whole is obtained by accumulating all of the update amounts.

As is apparent from the example shown in Figure 8, with the boosting inference model according to the present embodiment, the accumulated update amount is a gradual update amount centered on the additional learning point. Therefore, an improvement in convergence stability or the like during additional learning is realized.

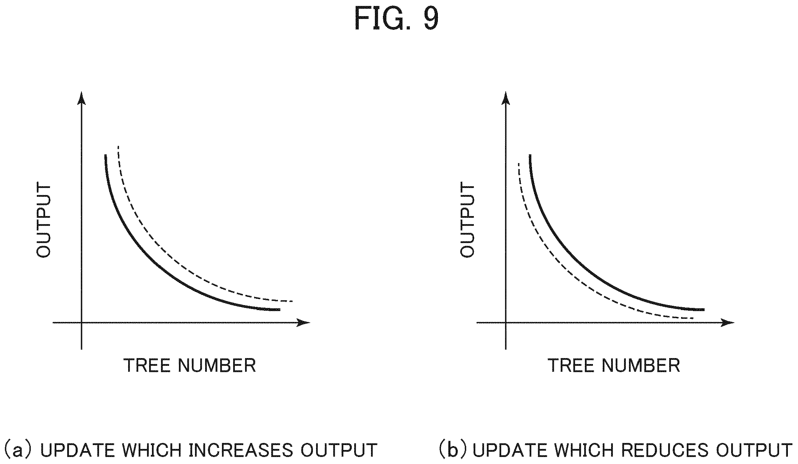

Figure 9 is an explanatory diagram related to a forging-like update. Figure 9(a) represents an update in a direction in which output increases and Figure 9(b) represents an update in a direction in which output decreases. An axis of abscissa represents a number of a decision tree in which the larger the number of a decision tree, the lower the decision tree. In addition, an axis of ordinate represents output. Furthermore, a solid line in a graph represents an output prior to an update and a dashed line represents an output after the update.

As is apparent from Figure 9, in an update according to the present embodiment, since a value obtained by dividing a gradient by the number of decision trees is equally added to output, all decision tree outputs can be updated by update amounts with a same sign. Accordingly, learning that pushes up or pushes down output as a whole can be performed. Such an effect contributes to convergence stability of machine learning.

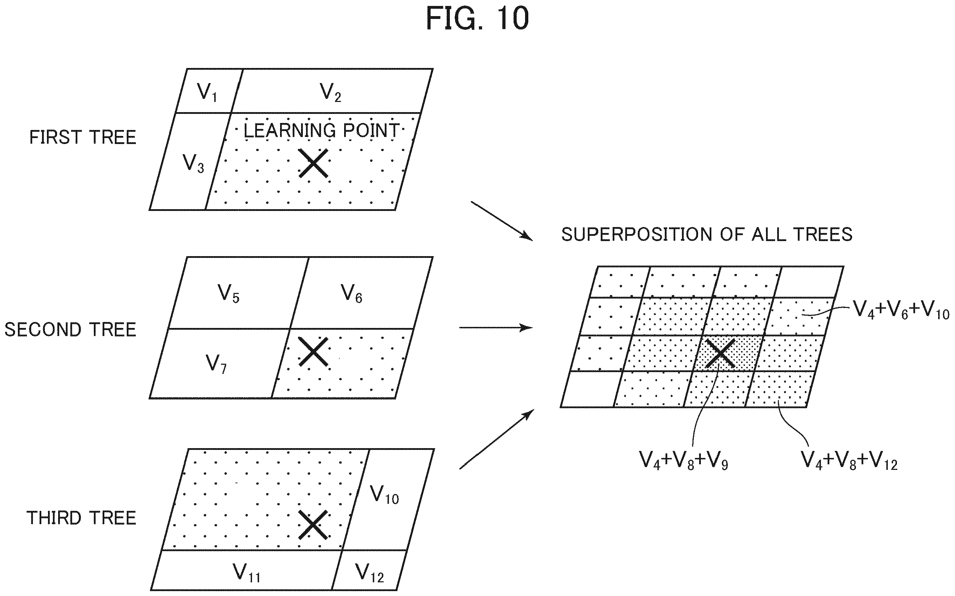

Figure 10 is a diagram explaining the effect of additional learning according to the present embodiment from another angle. Three conceptual diagrams of a state space used by each decision tree that constitute a boosting inference model as a learning target are vertically arranged on a left side of Figure 10. In addition, a conceptual diagram of a state space created by superimposing the state spaces on top of each other is arranged on a right side of Figure 10.

In a top example on the left side of Figure 10, symbols $V_1$, $V_2$, $V_4$, and $V_3$ are attached clockwise from top left to each divided state space. In a center example, symbols $V_5$, $V_6$, $V_8$, and $V_7$ are attached clockwise from top left to each divided state space. In a bottom example, symbols $V_9$, $V_{10}$, $V_{12}$, and $V_{11}$ are attached clockwise from top left to each divided state space.

In such a state, when learning data indicated by an X in Figure 10 is provided, output of a region hatched with dots in Figure 10 or, in other words, a region of $V_4$, $V_8$, and $V_9$ is updated. By superimposing the updated regions, a configuration in which peripheral regions centered around the learning point are gradually updated in a same direction is realized as shown in the conceptual diagram on the right side of Figure 10. In other words, forging-like learning in which peripheral regions of the learning point are also gradually updated can be performed.

Returning to Figure 6, after completing the additional learning processing, the additional learning processing section 28 performs processing of storing the additionally-learned boosting inference model in the storage section 26 (S526), and the additional learning processing (S52) ends.

Returning to Figure 4, control processing (S51) based on inference processing is performed once again and, subsequently, the processing is repeated. Such repetitive processing is repeated until there is interrupt processing by an end signal (not illustrated) or the like.

While the present embodiment is configured to update output data using expression 2, the present invention is not limited to such a configuration. In other words, other methods may also be used as long as an update is performed using an update amount based on final output data of a boosting inference model and correct answer data.

(1.3 Experimental example)

Next, a comparative experiment example related to inference accuracy of a conventional boosting inference model shown in Figures 20 and 21 and the boosting inference model according to the present embodiment will be described.

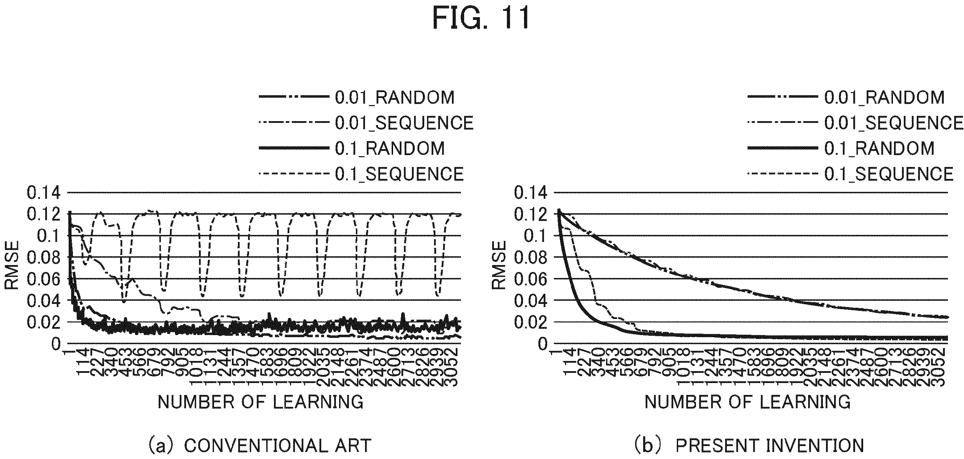

Figure 11(a) is a diagram showing a relationship between the number of learning and inference error (RMSE: root mean square error) when using a conventional boosting inference model, and Figure 11(b) is a diagram showing a relationship between the number of learning and inference error (RMSE: root mean square error) when using the inference model according to the present embodiment.

Note that, in both diagrams, after causing the boosting inference model to learn a sinusoidal wave (sine wave) as new learning, the boosting inference model is caused to learn a value obtained by shifting a phase of the sinusoidal wave by 10 degrees as additional learning. In addition, the number of inference models that constitute the boosting inference models is the same. Furthermore, in the diagrams, 0.01_random represents a case where arbitrary points of the sinusoidal wave are randomly learned at a learning rate of 0.01 and 0.01_sequence represents a case where points that constitute the sinusoidal wave are sequentially learned at a learning rate of 0.01. In a similar manner, 0.1_random represents a case where arbitrary points of the sinusoidal wave are randomly learned at a learning rate of 0.1 and 0.1_sequence represents a case where points that constitute the sinusoidal wave are sequentially learned at a learning rate of 0.1.

As is apparent from Figure 11, compared to the RMSE oscillating depending on the learning rate in the conventional boosting inference model, RMSE decreases in a stable manner without any oscillation even when the learning rate is changed in the boosting inference model according to the present embodiment. In other words, it is understood that the boosting inference model according to the present embodiment has more preferable convergence stability and enables learning parameters to be more readily adjusted as compared to the conventional boosting inference model.

While all inference models (trained models) that constitute the boosting inference model are described as targets of online learning in the present embodiment, the present embodiment is not limited to such a configuration. Therefore, for example, a configuration may be adopted in which only inference models lower than a predetermined inference model of which a contribution toward output is generally small are used as learners to be subjected to online learning according to the present embodiment, and inference models equal to or higher than the predetermined inference model are used as decision trees not subjected to additional learning.

(2. Second embodiment)

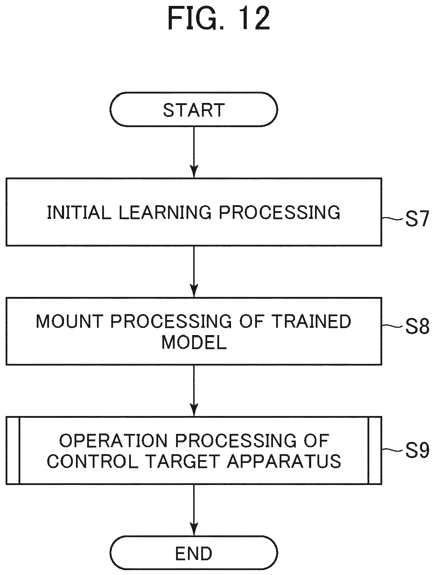

Next, a second embodiment of the present invention will be described with reference to Figures 12 to 16. In the present embodiment, an example of a configuration in which each inference model that constitutes a boosting inference model includes two models, namely, a model to be subjected to offline learning and a model to be subjected to online learning will be described. Note that, apparatus configurations and the like are approximately the same as those according to the first embodiment and thus descriptions thereof will be omitted and, hereinafter, corresponding components and signs are similar to those according to the first embodiment with the exception of those newly defined in the second embodiment.

Figure 12 is a general flow chart according to the second embodiment. As is apparent from Figure 12, even in the second embodiment, initial learning processing for generating a boosting inference model (S7), mount processing of the generated trained boosting inference model (S8), and operation processing of a control target apparatus accompanying additional learning (S9) are performed in a similar manner to the first embodiment.

Once the initial learning processing (S7) starts, first, learning processing is performed in a descending order from the top with respect to a boosting inference model or, in other words, the respective inference models that constitute the boosting inference model (also refer to Figures 20 and 21).

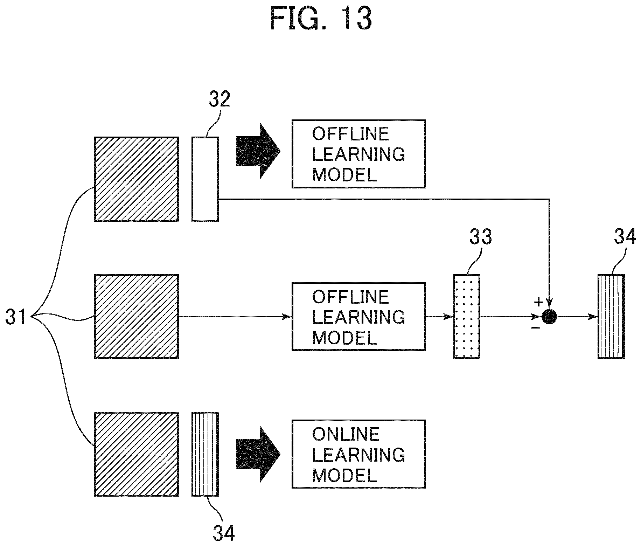

Figure 13 is a conceptual diagram of each learning model that constitutes the boosting inference model during initial learning. In the diagram, learning processing of an offline learning model is conceptually shown in an upper part, generation processing of differential data is conceptually shown in a middle part, and learning processing of an online learning model is conceptually shown in a lower part. Hereinafter, a description will be given with reference to the diagram.

Once initial learning is started, a data group of training data that is constituted by the training input data 31 and the training correct answer data 32 is read in a similar manner to the first embodiment. Subsequently, in each inference model, first, supervised learning is performed with respect to the offline learning model. In other words, as is apparent from the upper part of Figure 13, supervised learning is performed with respect to the offline learning model based on the training input data 31 and the training correct answer data 32. Note that, as the training correct answer data 32, the training correct answer data 32 is used in the highest inference model but a difference between an accumulated value of inferred output data corresponding to the training input data 31 of a higher inference model after learning and correct answer data is used in inference models lower than the highest inference model.

While various known learning models or combinations thereof can be adopted as the offline learning model in the present embodiment, a decision tree (regression tree) is adopted in the present embodiment. Note that, a formulation model not accompanied by learning can be used instead of the offline learning model. Hereinafter, trained models obtained by machine learning and models based on formulation may collectively be simply referred to as models.

Subsequently, in each inference model, generation processing of differential data is performed with respect to the trained offline learning model. As is apparent from the middle part of Figure 13, the boosting inference model generation processing section 12 performs processing of generating differential data 34 by inputting the training input data 31 to the generated offline trained model, calculating output data 33 (inference result) of the training input data 31, and calculating a difference between the output data 33 and the training correct answer data 32.

After generating the differential data 34, learning processing is performed with respect to the online learning model by using the differential data 34 as correct answer data. As is apparent from the lower part of Figure 13, the boosting inference model generation processing section 12 performs machine learning with respect to the online learning model using the training input data 31 and the differential data 34 and performs processing of generating a trained model for online learning. In the present embodiment, this learning model is also a decision tree (regression tree) capable of regressive output.

In other words, the boosting inference model generation processing section 12 sequentially performs such learning processing with respect to each piece of learning data from higher inference models to a lowermost inference model and generates a trained boosting inference model.

Once the initial learning processing (S7) is completed, next, processing of mounting the generated boosting inference model to the control apparatus 200 is performed (S8) and operation processing of a control target apparatus (S9) is performed in a similar manner to the first embodiment.

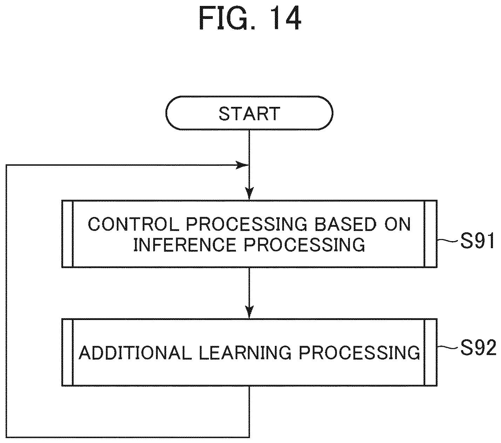

Figure 14 is a detailed flow chart of the operation processing (S9). As is apparent from the diagram, control processing of the control target apparatus which is performed using inference of the boosting inference model (S91) and additional learning processing based on actual data obtained from the control target apparatus or, in other words, correct answer data (S92) are repetitively performed in a similar manner to the first embodiment.

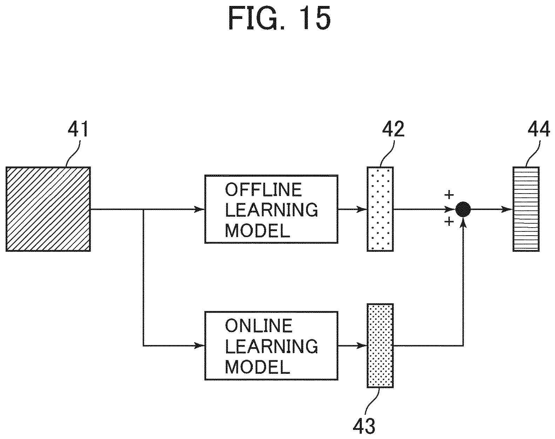

Figure 15 is a conceptual diagram of inference processing in each inference model that constitutes the boosting inference model. As is apparent from the diagram, when input data 41 obtained from the control target apparatus by the input data acquiring section 21 is acquired, the inference processing section 22 inputs the input data 41 to the trained offline learning model and the trained online learning model. The offline learning model and the online learning model respectively perform inference processing and respectively generate first output data 42 that is output data of the offline learning model and second output data 43 that is output data of the online learning model.

Subsequently, the inference processing section 22 adds the first output data 42 and the second output data 43 and generates output data 44. Subsequently, the inference processing section 22 adds all of the pieces of the output data 44 obtained from the respective inference models and generates inferred output data of the boosting inference model, and outputs the inferred output data from the control apparatus via the data output section 24. The inferred output data is provided to the control target apparatus to be used in control.

Once control processing of the control target apparatus based on inference processing (S91) is completed, additional learning processing (S92) is next performed. In the present embodiment, the additional learning processing is only performed with respect to the online learning model.

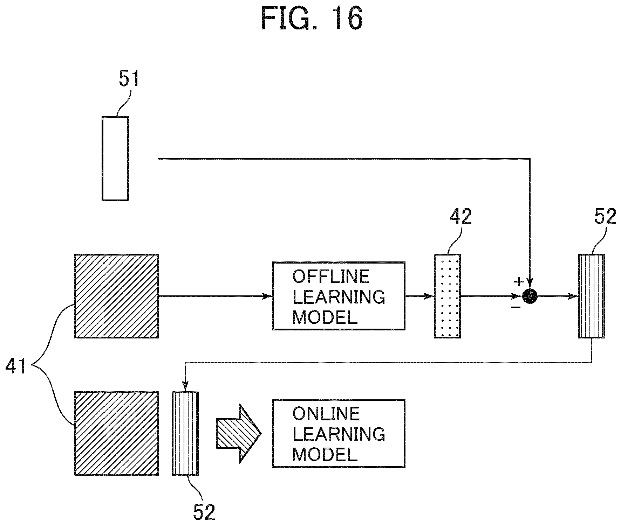

Figure 16 is a conceptual diagram of online additional learning performed in each inference model that constitutes a boosting inference model. As is apparent from the diagram, once additional learning processing starts, the additional learning processing section 28 reads a latest boosting inference model, most recent input data 41, and correct answer data 51 from the storage section 26.

Subsequently, in each inference model that constitutes the boosting inference model, the additional learning processing section 28 inputs the input data 41 acquired from the control target apparatus to the trained model for offline learning and generates output data 42 that is an inference result of the trained model for offline learning. In addition, differential data 52 is generated from a difference between the output data 42 and the correct answer data 51 acquired from the control target apparatus in association with the input data 41.

Based on the differential data 52 and the input data 41, the additional learning processing section 28 performs processing of updating the online learning model of each inference model and implementing additional learning.

More specifically, processing of implementing additional learning is performed as follows. First, when the differential data 52 is denoted by E, the correct answer data 51 is denoted by y, and the output data 42 for the offline learning model is denoted by $y_{predoff}$, E, y, and $y_{predoff}$ satisfy the following equation.

[Expression 3]

$$E = y - y_{predoff}$$

In order to learn the differential data 52, the additional learning processing section 28 calculates a gradient ngrad as represented by the following equation by multiplying a difference between the differential data 52 and an inferred output $y_{preaon}$ of the online learning model by a learning rate $\eta$.

[Expression 4]

$$ngrad = \eta \left( E - y_{predon} \right)$$

In addition, the additional learning processing section 28 updates an output value of the online learning model of each inference model that constitutes the boosting inference model so as to distribute the gradient to each inference model. More specifically, according to the following equation, the output value yon corresponding to an output node (terminal node) of the online learning model of each inference model is updated by adding a value obtained by dividing the gradient (ngrad) by the number of inference models that constitute the boosting inference model or, in other words, by the number (TreeNum) of decision trees that constitute the boosting inference model.

[Expression 5]

$$y_{on_i} = y_{on_i} + \frac{ngrad}{TreeNum}$$

In the equation provided above, an equal sign represents an assignment of a value of a right side to a value of a left side. In addition, a method of updating an output value corresponding to an output node is not limited to the method described above and various modifications are possible. For example, an arithmetic average or a weighted average may be taken using an update amount and an output value prior to the update.

After completing the additional learning processing, the additional learning processing section 28 performs processing of storing the decision trees in the storage section 26 and the additional learning processing ends.

Thereafter, operation processing of the control target apparatus is performed by repeating the control processing of the control target apparatus based on inference processing (S91) and the additional learning processing (S92).

According to the configuration described above, since a decision tree is updated using a method of simply adding an update amount to output data instead of changing a structure of the decision tree, changes related to the structure of the decision tree such as a depth do not occur and calculations requiring a relatively large calculation amount such as a calculation of a branch condition need not be performed during additional learning. Therefore, an additional learning method of a decision tree can be provided in which additional learning only requires a small calculation cost, performing the additional learning does not alter inference time, and an additional storage capacity and the like are not required. Accordingly, for example, even when performing online additional learning or the like with respect to a decision tree under limited hardware resources, a control apparatus capable of securing reliability and safety of control can be provided.

According to the configuration related to the present embodiment, since there is no need to perform sequential learning from high-order learners, learning can be parallelized and time related to additional learning can be reduced. Accordingly, so-called online learning and the like in which additional learning is performed using data obtained every time the control target apparatus is operated can be readily performed.

According to the configuration related to the present embodiment, a degree of the update can be adjusted according to the learning rate $\eta$. Furthermore, since an adjustment is performed based on the number of decision trees, an appropriate update amount can be distributed to each inference model in accordance with a size of the boosting inference model.

According to the configuration related to the present embodiment, since a same update amount is applied with respect to each inference model that constitutes the boosting inference model and a sign of the update amount is the same, forging-like learning can be performed and convergence stability of learning can be improved.

According to the configuration related to the present embodiment, in each inference model that constitutes a boosting inference model, adaptive machine learning can be performed due to offline learning with respect to a characteristic change of a target such as a concept drift while securing certain output accuracy due to an approximate function acquired in advance by offline learning. In other words, a machine learning technique that can adapt to a characteristic change, a model change, or the like of a target while guaranteeing output accuracy to a certain degree can be provided.

In other words, an additional learning method and an information processing apparatus or the like for executing the additional learning method can be provided, which enable, in an ensemble-type learner constituted by a plurality of learners, optimization of update amounts to be distributed to the respective learners.

While all inference models (trained models) that constitute the boosting inference model are described as being constituted by an online learning model and an offline learning model in the present embodiment, the inference models are not limited to such a configuration. Therefore, for example, a configuration may also be adopted in which only inference models lower than a predetermined inference model of which a contribution toward output is generally small are used as learners constituted by the online learning model and the offline learning model according to the present embodiment and inference models equal to or higher than the predetermined inference model are used as decision trees not subjected to additional learning.

In addition, calculations of a gradient and the like are not limited to those related to the present embodiment as long as final output data of boosting and correct answer data are used. Therefore, various modifications can be made. For example, the gradient ngrad may also be calculated as follows in consideration of the number DataNum of pieces of learning data. Note that, in the following equation, an equal sign represents an assignment of a value of a right side to a value of a left side.

[Expression 6]

$$\text{ngrad} = \eta \left( \frac{\text{DataNum} * \text{y}_{\text{predon}} + \text{E}}{\text{DataNum} + 1} - \text{y}_{\text{predon}} \right)$$

According to such a configuration, an update can be performed such that the larger the number of pieces of learning data, the smaller an update amount. This similarly applies to the first embodiment.

(3. Third embodiment)

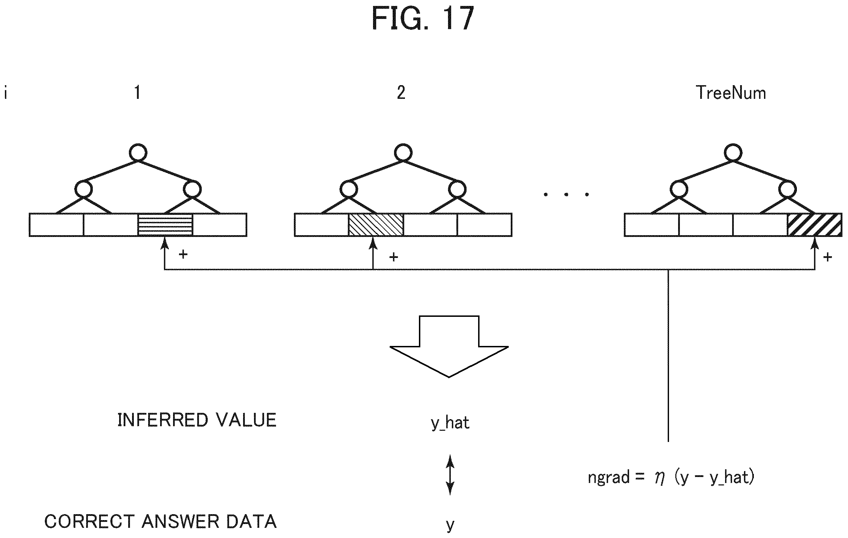

Next, a third embodiment of the present invention will be described with reference to Figure 17. In the present embodiment, an example of performing bagging learning and, in particular, performing additional learning with respect to a random forest as a type of ensemble learning will be described.

Note that, apparatus configurations and the like are approximately the same as those according to the first embodiment and descriptions thereof will be omitted. In addition, since operations similar to those of the first embodiment are performed with the exception of using a bagging inference model instead of a boosting inference model, descriptions related to operations will be omitted when appropriate. Note that, in the present embodiment, the term "bagging inference model" is to refer to a trained model generated by bagging learning and may also be referred to as a bagging learning-type inference model or the like.

In initial learning (S7), processing of generating the random forest described with reference to Figure 22 or, in other words, a bagging inference model is performed on the information processing apparatus 100. The generated bagging inference model is mounted to the control apparatus 200. Subsequently, additional learning is performed with respect to the bagging inference model based on data obtained after operation.

In other words, in additional learning processing (S52), when processing starts, the additional learning processing section 28 performs processing of reading a latest trained model or, in other words, a bagging inference model from the storage section 26 (S521).

In addition, the additional learning processing section 28 performs processing of acquiring input data from the storage section 26 and acquiring correct answer data which is actual data corresponding to the input data from the control target apparatus (S522).

Subsequently, the additional learning processing section 28 performs additional learning processing with respect to the bagging inference model using the input data and the correct answer data (S524).

More specifically, first, the additional learning processing section 28 calculates a gradient (ngrad) by multiplying a difference between final inferred output data y_hat of the bagging inference model obtained in the inference processing (S514) and correct answer data y by a learning rate $\eta$. The inferred output data y_hat is calculated by taking an arithmetic average of an output $y_i$ of TreeNum-number of decision trees.

[Expression 7]

$$y\_hat = \frac{1}{TreeNum} \sum_{i=1}^{TreeNum} yi$$

In addition, the gradient ngrad is represented as follows.

[Expression 8]

$$ngrad = \eta \ (y-y\_hat)$$

Note that, the difference between the inferred output data y_hat and the correct answer data y is derived from the fact that a square error has been adopted as a loss function and a calculation method of a gradient is not limited to the method described above. Therefore, a gradient may be calculated based on another loss function such as an absolute value error.

Next, the output value $y_i$ of each inference model that constitutes the bagging inference model is updated so as to distribute the gradient to each inference model. More specifically, according to the following equation, the output value $y_i$ corresponding to an output node (terminal node) of each inference model is updated by adding the gradient (ngrad).

[Expression 9]

$$yi = yi + ngrad$$

In the equation provided above, an equal sign represents an assignment of a value of a right side to a value of a left side. In addition, a method of updating an output value corresponding to an output node is not limited to the method described above and various modifications are possible. For example, an arithmetic average or a weighted average may also be taken using an update amount and an output value prior to the update.

By updating a decision tree using a method of simply adding to output data instead of changing a structure of the decision tree as described above, changes related to the structure of the decision tree such as a depth do not occur and calculations requiring a relatively large calculation amount such as a calculation of a branch condition need not be performed during additional learning. Therefore, an additional learning method of a decision tree can be provided in which additional learning only requires a small calculation cost, performing the additional learning does not alter inference time, and an additional storage capacity and the like are not required. Accordingly, for example, even when performing online additional learning or the like with respect to a decision tree under limited hardware resources, a control apparatus capable of securing reliability and safety of control can be provided.

Figure 17 is a conceptual diagram of update processing according to the third embodiment. As is apparent from the diagram, in the present embodiment, output data associated with an output node of each inference model that constitutes a bagging inference model is updated based on a value obtained by multiplying a difference between inferred output data y_hat that is a final inference result of the bagging inference model and correct answer data y by a learning rate η.

According to such a configuration, a degree of the update can be adjusted according to the learning rate η.

In addition, since a same update amount is applied with respect to each inference model that constitutes the bagging inference model and a sign of the update amount is the same, forging-like learning can be performed and convergence stability of learning can be improved.

In other words, an additional learning method and an information processing apparatus or the like for executing the additional learning method can be provided, which enable, in an ensemble-type learner constituted by a plurality of learners, optimization of update amounts to be distributed to the respective learners.

(4. Modifications)

The present invention is not limited to the embodiments described above and can be implemented in various modifications.

While an example of solving a regression problem using, in particular, a regression tree among decision trees is described in the embodiments presented above, the present invention is not limited to such a configuration. Therefore, a classification problem can also be solved using the configuration described above.

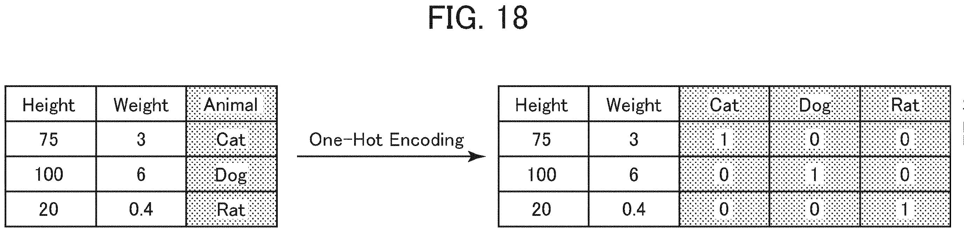

Figure 18 is an explanatory diagram showing an overview of a method of solving a classification problem using a regression tree. A table that respectively organizes three pieces of data related to animals with a focus on a height (Height), a weight (Weight), and a type (Animal) of the animal is drawn on a left side of the diagram. A situation where a type of an animal is inferred based on a height and a weight of a new product in this state will be considered.

The types of animals in the example are a "Cat", a "Dog", and a "Rat" and, since these are labels, the types cannot be handled by a regression tree as-is. Therefore, so-called one-hot encoding is used. One-hot encoding refers to processing of replacing a variable with a new feature amount having dummy variables of 0 and 1.

A table that represents a state of each variable after one-hot encoding processing is shown on a right side of the diagram. As is apparent from the diagram, the item "Type of animal" is replaced with three items of "Cat", "Dog", and "Rat", and "1" is arranged with respect to a corresponding type of animal while "0" is arranged with respect to a non-corresponding type of animal. By performing conversion processing that converts an output dimension from one dimension to three dimensions, a classification problem can be handled as a regression problem.

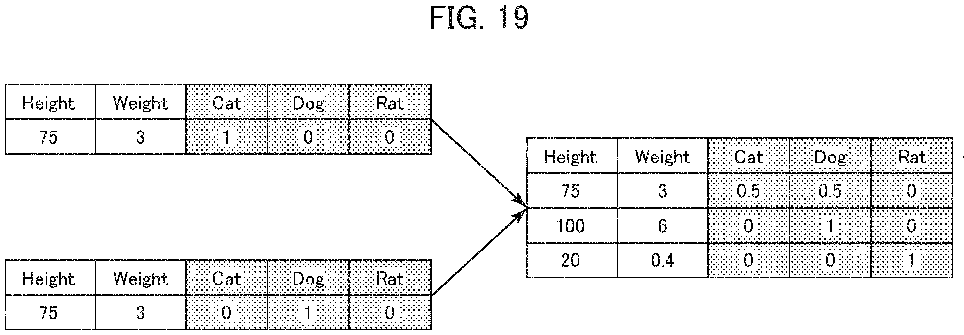

Furthermore, a case where additional learning is performed will be described with reference to Figure 19. Figure 19 is an explanatory diagram of a case where additional learning is performed in a method of solving a classification problem using a regression tree. As shown in a table on a left side of the diagram, let us assume that data of a "dog" with a height of "75" and a weight of "3" has been further added to the table as new input data. In this case, a value of the item of the type of animal is handled as a probability value of which a sum equals 1 and, with respect to the type of animal with a height of "75" and a weight of "3", probabilities of the animal being a cat or a dog are respectively calculated as 0.5 (50%). In other words, an update is performed as shown in a table on a right side of the diagram.

A classification problem can be solved using a regression tree by adopting the configuration described above for each decision tree that constitutes a boosting inference model. A final output of the boosting inference model may also be obtained by, for example, taking a majority vote or a weighted majority vote of classification results of the respective inference models.

While a configuration in which a value with respect to each label is directly handled as a probability value is adopted in the example using one-hot encoding described above, the handling of a value with respect to each label is not limited to such a configuration. Therefore, for example, a value with respect to each label may also be regressively handled by converting the value into a probability value using a softmax function provided below.

[Expression 10]

$$\varphi(u_k) = \frac{e^{u_k}}{\sum_{i=1}^{K} e^{u_i}}$$

While an example of using a decision tree as each machine learning model that constitutes a boosting inference model is described in the embodiments presented above, the present invention is not limited to such a configuration. Therefore, for example, other machine learning models such as a neural network may also be adopted. In this case, for example, a parameter that constitutes the machine learning model is updated using a gradient and error backpropagation or the like.

While embodiments of the present invention have been described above, it is to be understood that the embodiments described above simply represent a part of application examples of the present invention and are not intended to limit a technical scope of the present invention to the specific configurations of the embodiments. In addition, the embodiments described above can be appropriately combined with each other as long as no contradictions arise.

Industrial Applicability

The present invention can be utilized in various industries and the like in which machine learning techniques are used.

Reference Signs List

2 Storage section
11 Learning target data acquiring section
12 Boosting inference model generation processing section
13 Storage processing section
21 Input data acquiring section
22 Inference processing section
24 Data output section
26 Storage section
28 Additional learning processing section
100 Information processing apparatus
200 Control apparatus

**Claims**

1. An information processing apparatus, comprising:

   a data acquiring section that acquires input data and correct answer data that corresponds to the input data;
   an inferred output data generating section that generates inferred output data of an ensemble learning-type inference model by inputting the input data to the ensemble learning-type inference model that performs inference based on each inference result by a plurality of inference models; and
   an additional learning processing section that performs additional learning processing with respect to a part of or all of each of the inference models that constitute the ensemble learning-type inference model by using an update amount based on the inferred output data and the correct answer data.

2. The information processing apparatus according to claim 1, wherein the ensemble learning-type inference model is a boosting learning-type inference model which is constituted by a plurality of inference models formed by sequential learning so that each of the inference models reduces an inference error due to a higher-order inference model group.

3. The information processing apparatus according to claim 1, wherein the ensemble learning-type inference model is a bagging learning-type inference model which performs inference based on each inference result of a plurality of inference models, each formed by learning based on a plurality of data groups extracted from a same learning target data group.

4. The information processing apparatus according to claim 1, wherein the update amount is a value based on a difference between the inferred output data and the correct answer data.

5. The information processing apparatus according to claim 1, wherein the update amount is a value based on a value obtained by multiplying a difference between the inferred output data and the correct answer data by a learning rate.

6. The information processing apparatus according to claim 1, wherein the update amount is a value calculated by dividing a value obtained by multiplying a difference between the inferred output data and the correct answer data by a learning rate by the number of inference models that constitute the ensemble learning-type inference model.

7. The information processing apparatus according to claim 1, wherein the inference model is a trained decision tree.

8. The information processing apparatus according to claim 7, wherein the additional learning processing is processing of accumulating the update amount with respect to an inferred output of a decision tree which constitutes each of the inference models.

9. The information processing apparatus according to claim 1, wherein the inference model is a trained neural network.

10. The information processing apparatus according to claim 9, wherein the additional learning processing is processing of updating, with respect to a neural network which constitutes each of the inference models, a parameter of the neural network by back-propagating the update amount.

11. The information processing apparatus according to claim 2, wherein the boosting learning-type inference model further includes a first inference model, the first inference model comprising:

a first output data generating section that generates first output data by inputting the input data to a first approximate function generated based on training input data and training correct answer data that corresponds to the training input data;
a second output data generating section that generates second output data by inputting the input data to a second trained model generated by performing machine learning based on the training input data and difference data between output data generated by inputting the training input data to the first approximate function and the training correct answer data; and
a final output data generating section that generates final output data based on the first output data and the second output data, wherein
the additional learning processing is processing of updating the second trained model using an update amount based on difference data between the correct answer data and the first output data and the inferred output data.

12. The information processing apparatus according to claim 2 or 11, wherein in the boosting learning-type inference model, only inference models equal to or lower than a predetermined inference model are configured as the first inference model.

13. The information processing apparatus according to claim 11, wherein the first approximate function is a first trained model generated by performing machine learning based on the training input data and the training correct answer data.

14. The information processing apparatus according to claim 11, wherein the first approximate function is a function obtained by formulating a relationship between the training input data and the training correct answer data.

15. The information processing apparatus according to claim 1, further comprising a conversion processing section that converts, when the correct answer data is a label, the label into a numerical value.

16. The information processing apparatus according to claim 1, wherein the additional learning processing is online learning.

**17.** An information processing method, comprising:

a data acquisition step of acquiring input data and correct answer data that corresponds to the input data;
an inferred output data generation step of generating inferred output data of an ensemble learning-type inference model by inputting the input data to the ensemble learning-type inference model that performs inference based on each inference result by a plurality of inference models; and
an additional learning processing step of performing additional learning processing with respect to a part of or all of each of the inference models that constitute the ensemble learning-type inference model by using an update amount based on the inferred output data and the correct answer data.

**18.** An information processing program, comprising:

a data acquisition step of acquiring input data and correct answer data that corresponds to the input data;
an inferred output data generation step of generating inferred output data of an ensemble learning-type inference model by inputting the input data to the ensemble learning-type inference model that performs inference based on each inference result by a plurality of inference models; and
an additional learning processing step of performing additional learning processing with respect to a part of or all of each of the inference models that constitute the ensemble learning-type inference model by using an update amount based on the inferred output data and the correct answer data.

**19.** An information processing system, comprising:

a data acquiring section that acquires input data and correct answer data that corresponds to the input data;
an inferred output data generating section that generates inferred output data of an ensemble learning-type inference model by inputting the input data to the ensemble learning-type inference model that performs inference based on each inference result by a plurality of inference models; and
an additional learning processing section that performs additional learning processing with respect to a part of or all of each of the inference models that constitute the ensemble learning-type inference model by using an update amount based on the inferred output data and the correct answer data.

**20.** A control apparatus for controlling a target apparatus, the control apparatus comprising:

a data acquiring section that acquires input data and correct answer data that corresponds to the input data from the target apparatus;
an inferred output data generating section that generates inferred output data of an ensemble learning-type inference model by inputting the input data to the ensemble learning-type inference model that performs inference based on each inference result by a plurality of inference models; and
an additional learning processing section that performs additional learning processing with respect to a part of or all of each of the inference models that constitute the ensemble learning-type inference model by using an update amount based on the inferred output data and the correct answer data.

# FIG. 1

STORAGE SECTION — 2

LEARNING TARGET DATA ACQUIRING SECTION — 11

BOOSTING INFERENCE MODEL GENERATION PROCESSING SECTION — 12

STORAGE PROCESSING SECTION — 13

100

# FIG. 2

200    INPUT DATA

ACTUAL DATA
(CORRECT ANSWER DATA)

21 —

INPUT DATA
ACQUIRING
SECTION

22 —

INFERENCE
PROCESSING
SECTION

STORAGE
SECTION

ADDITIONAL
LEARNING
PROCESSING
SECTION

26

28

24 —

DATA OUTPUT
SECTION

OUTPUT DATA

# FIG. 3

```
        ┌─────────────┐
        │    START    │
        └─────────────┘
               │
               ▼
  ┌────────────────────────────┐
  │ INITIAL LEARNING PROCESSING │──S1
  └────────────────────────────┘
               │
               ▼
  ┌────────────────────────────┐
  │ MOUNT PROCESSING OF TRAINED │──S3
  │           MODEL             │
  └────────────────────────────┘
               │
               ▼
  ┌────────────────────────────┐
  │   OPERATION PROCESSING OF   │──S5
  │ CONTROL TARGET APPARATUS    │
  └────────────────────────────┘
               │
               ▼
        ┌─────────────┐
        │     END     │
        └─────────────┘
```

# FIG. 4

```
        ┌─────────────┐
        │    START    │
        └──────┬──────┘
               │
    ┌──────────▼──────────────────────┐
    │  ┌────────────────────────────┐ │
    │  │ CONTROL PROCESSING BASED ON│ │──S51
    │  │    INFERENCE PROCESSING    │ │
    │  └────────────────────────────┘ │
    │               │                 │
    │  ┌────────────▼───────────────┐ │
    │  │ ADDITIONAL LEARNING PROCESSING │──S52
    │  └────────────────────────────┘ │
    └─────────────────────────────────┘
```

# FIG. 5

```
        ┌─────────────┐
        │    START    │
        └─────────────┘
               │
               ▼
   ┌──────────────────────────┐
   │ PROCESSING OF ACQUIRING  │────S511
   │        INPUT DATA        │
   └──────────────────────────┘
               │
               ▼
   ┌──────────────────────────┐
   │ PROCESSING OF READING    │────S513
   │   LATEST TRAINED MODEL   │
   └──────────────────────────┘
               │
               ▼
   ┌──────────────────────────┐
   │ INFERENCE PROCESSING     │────S514
   │  BASED ON TRAINED MODEL  │
   └──────────────────────────┘
               │
               ▼
   ┌──────────────────────────┐
   │ PROCESSING OF OUTPUTTING │────S516
   │          DATA            │
   └──────────────────────────┘
               │
               ▼
        ┌─────────────┐
        │     END     │
        └─────────────┘
```

# FIG. 6

START

PROCESSING OF READING LATEST TRAINED MODEL ~S521

PROCESSING OF ACQUIRING INPUT DATA AND CORRECT ANSWER DATA ~S522

ADDITIONAL LEARNING PROCESSING ~S524

PROCESSING OF STORING ADDITIONALLY-LEARNED TRAINED MODEL ~S526

END

# FIG. 7

$$+ \frac{ngrad}{TreeNum}$$

$$+ \frac{ngrad}{TreeNum}$$

$$+ \frac{ngrad}{TreeNum}$$

INFERRED VALUE        y_hat

CORRECT ANSWER DATA        y

$$ngrad = \eta\,( y - y\_hat)$$

# FIG. 8

◯ LEARNING DATA POINT

UPDATE OF TREE 1

UPDATE OF TREE 2

UPDATE OF TREE 3

ACCUMULATED UPDATE AMOUNT

(a) CONVENTIONAL ART

◯ LEARNING DATA POINT

UPDATE OF TREE 1

UPDATE OF TREE 2

UPDATE OF TREE 3

ACCUMULATED UPDATE AMOUNT

(b) PRESENT INVENTION

EP 4 250 191 A1

## FIG. 9

(a) UPDATE WHICH INCREASES OUTPUT

(b) UPDATE WHICH REDUCES OUTPUT

# FIG. 10

FIRST TREE

$V_1$ | $V_2$
LEARNING POINT
$V_3$ | ✕

SECOND TREE

$V_5$ | $V_6$
$V_7$ | ✕

THIRD TREE

✕ | $V_{10}$
$V_{11}$ | $V_{12}$

SUPERPOSITION OF ALL TREES

$V_4+V_6+V_{10}$

$V_4+V_8+V_9$

$V_4+V_8+V_{12}$

EP 4 250 191 A1

FIG. 11

(a) CONVENTIONAL ART

(b) PRESENT INVENTION

# FIG. 12

```
        ┌──────────────┐
        │    START     │
        └──────┬───────┘
               │
               ▼
   ┌───────────────────────────┐
   │ INITIAL LEARNING PROCESSING│──S7
   └───────────┬───────────────┘
               │
               ▼
   ┌───────────────────────────┐
   │  MOUNT PROCESSING OF TRAINED│──S8
   │           MODEL            │
   └───────────┬───────────────┘
               │
               ▼
   ┌───────────────────────────┐
   │  OPERATION PROCESSING OF   │──S9
   │  CONTROL TARGET APPARATUS  │
   └───────────┬───────────────┘
               │
               ▼
        ┌──────────────┐
        │     END      │
        └──────────────┘
```

# FIG. 13

# FIG. 14

START

CONTROL PROCESSING BASED ON
INFERENCE PROCESSING — S91

ADDITIONAL LEARNING PROCESSING — S92

# FIG. 15

# FIG. 16

# FIG. 17

i     1        2        TreeNum

INFERRED VALUE     y_hat

CORRECT ANSWER DATA     y

$$ngrad = \eta \ (y - y\_hat)$$

# FIG. 18

| Height | Weight | Animal |
|--------|--------|--------|
| 75 | 3 | Cat |
| 100 | 6 | Dog |
| 20 | 0.4 | Rat |

One-Hot Encoding →

| Height | Weight | Cat | Dog | Rat |
|--------|--------|-----|-----|-----|
| 75 | 3 | 1 | 0 | 0 |
| 100 | 6 | 0 | 1 | 0 |
| 20 | 0.4 | 0 | 0 | 1 |

FIG. 19

| Height | Weight | Cat | Dog | Rat |
|--------|--------|-----|-----|-----|
| 75 | 3 | 1 | 0 | 0 |

| Height | Weight | Cat | Dog | Rat |
|--------|--------|-----|-----|-----|
| 75 | 3 | 0 | 1 | 0 |

| Height | Weight | Cat | Dog | Rat |
|--------|--------|-----|-----|-----|
| 75 | 3 | 0.5 | 0.5 | 0 |
| 100 | 6 | 0 | 1 | 0 |
| 20 | 0.4 | 0 | 0 | 1 |

# FIG. 20

OUTPUT VALUE

LARGE

n = 1

n = 2

n = 3

⋮

n = TreeNum

SMALL

## FIG. 21

# FIG. 22

i

1

2

TreeNum

y1

y2

...

yTreeNum

INFERRED VALUE

y_hat

EP 4 250 191 A1

## INTERNATIONAL SEARCH REPORT

| International application No. |
| --- |
| **PCT/JP2021/031189** |

| A. CLASSIFICATION OF SUBJECT MATTER |
| --- |
| ***G06N 20/20*** (2019.01)i<br>FI: G06N20/20 |
| According to International Patent Classification (IPC) or to both national classification and IPC |

| B. FIELDS SEARCHED |
| --- |
| Minimum documentation searched (classification system followed by classification symbols)<br>G06N3/00-99/00 |
| Documentation searched other than minimum documentation to the extent that such documents are included in the fields searched<br><br>Published examined utility model applications of Japan 1922-1996<br>Published unexamined utility model applications of Japan 1971-2021<br>Registered utility model specifications of Japan 1996-2021<br>Published registered utility model applications of Japan 1994-2021 |
| Electronic data base consulted during the international search (name of data base and, where practicable, search terms used)<br><br>IEEE Xplore |

| C. DOCUMENTS CONSIDERED TO BE RELEVANT | | |
| --- | --- | --- |
| Category* | Citation of document, with indication, where appropriate, of the relevant passages | Relevant to claim No. |
| X<br><br>Y<br>A | WO 2020/008919 A1 (AISING LTD.) 09 January 2020 (2020-01-09)<br>   paragraphs [0002]-[0017], [0041], [0048], [0049], [0074]-[0076], [0084]-[0086], fig. 3, 11. | 1, 3-5, 7, 17-19<br><br>2, 9, 10, 15, 16, 20<br>6, 8, 11-14 |
| Y<br><br><br><br>A | GORMAN, Ben. Gradient Boosting Explained. In: GormAnalysis. [online], 12 January 2017, [retrieved on 16 October 2021], retrieved from the Internet: <URL: https://gormanalysis.com/gradient-boosting-explained/>.<br>   particularly, see "# Draft 1" | 2<br><br><br><br>11-14 |
| Y<br><br><br><br><br><br>A | @woodyZootopia, Kaggle Masterが勾配ブースティングを解説する, In: Qiita, [online], 12 September 2019, [in Japanese], [retrieved on 16 October 2021], retrieved from the Internet: <URL: https://qiita.com/woodyZootopia/items/232e982094cd3c80b3ee>. [NOTE] This is Japanese translated version of document D2., non-official translation (Kaggle Master Explains Gradient Boosting.)<br>   particularly, see "Gradient boosting plan 1" | 2<br><br><br><br><br><br>11-14 |

| ☑ Further documents are listed in the continuation of Box C. | ☑ See patent family annex. |
| --- | --- |

| * Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| --- | --- |
| Date of the actual completion of the international search<br><br>**18 October 2021** | Date of mailing of the international search report<br><br>**02 November 2021** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**INTERNATIONAL SEARCH REPORT**

| International application No. |
| --- |
| **PCT/JP2021/031189** |

## C.    DOCUMENTS CONSIDERED TO BE RELEVANT

| Category* | Citation of document, with indication, where appropriate, of the relevant passages | Relevant to claim No. |
| --- | --- | --- |
| Y | JP 2018-005520 A (CLARION CO., LTD.) 11 January 2018 (2018-01-11) <br> paragraphs [0034], [0035], [0056]-[0058], [0062], [0105], [0169], [0182], fig. 1, 2A, 2B | 9, 10 |
| Y | JP 2019-057016 A (NIPPON TELEGR. & TELEPH. CORP.) 11 April 2019 (2019-04-11) <br> paragraphs [0037], [0039] | 15 |
| Y | GERON, Aurelien著, 下田倫大監訳, Scikit-LearnとTensorFlowによる実践機械学習, 初版, 東京: 株式会社オライリー・ジャパン, 25 April 2018, [in Japanese], ISBN: 978-4-87311-834-5, pages 15-17. (GERON, Aurelien (author), SHIMODA, Norihiro (translation supervisor). Hands-On Machine Learning with Scikit-Learn and TensorFlow. First edition, Tokyo: O'REILLY JAPAN, INC., 25 April 2018, [in Japanese], ISBN: 978-4-87311-834-5, pages 15-17.) <br> particularly, sections 1.3.2.1, 1.3.2.2. | 16 |
| Y | WO 2020/189565 A1 (DAIKIN INDUSTRIES, LTD.) 24 September 2020 (2020-09-24) <br> paragraphs [0062], [0063], [0065], [0070], [0071], [0073], [0076], [0078], [0081], fig. 8, 9A | 20 |

Form PCT/ISA/210 (second sheet) (January 2015)

**INTERNATIONAL SEARCH REPORT**
Information on patent family members

International application No.

**PCT/JP2021/031189**

| Patent document cited in search report | | | Publication date (day/month/year) | Patent family member(s) | Publication date (day/month/year) |
|---|---|---|---|---|---|
| WO | 2020/008919 | A1 | 09 January 2020 | US 2021/0125101 A1<br>paragraphs [0002]-[0017],<br>[0041], [0061], [0062], [0086]-<br>[0088], [0096]-[0098], fig. 3,<br>11<br>EP 3819827 A1 | |
| JP | 2018-005520 | A | 11 January 2018 | WO 2018/003212 A1<br>paragraphs [0034], [0035],<br>[0056]-[0058], [0062], [0105],<br>[0168], [0181], fig. 1, 2A, 2B | |
| JP | 2019-057016 | A | 11 April 2019 | (Family: none) | |
| WO | 2020/189565 | A1 | 24 September 2020 | JP 2020-148329 A<br>paragraphs [0062], [0063],<br>[0065], [0070], [0071],<br>[0073], [0076], [0078],<br>[0081], fig. 8, 9A. | |

Form PCT/ISA/210 (patent family annex) (January 2015)

**REFERENCES CITED IN THE DESCRIPTION**

**Patent documents cited in the description**

• JP 2019212171 A